(19) Europäisches Patentamt / European Patent Office / Office européen des brevets

(11) **EP 4 004 395 B1**

(12) **EUROPÄISCHE PATENTSCHRIFT**

(45) Veröffentlichungstag und Bekanntmachung des Hinweises auf die Patenterteilung:
**27.08.2025   Patentblatt 2025/35**

(21) Anmeldenummer: **20760371.3**

(22) Anmeldetag: **24.07.2020**

(51) Internationale Patentklassifikation (IPC):
**B60T 17/22** (2006.01)      **F16D 66/00** (2006.01)
**G01L 1/16** (2006.01)      **G01L 3/16** (2006.01)
**G01L 5/28** (2006.01)

(52) Gemeinsame Patentklassifikation (CPC):
**B60T 17/221; F16D 66/00; G01L 1/16; G01L 3/16; G01L 5/28;** F16D 2066/005

(86) Internationale Anmeldenummer:
**PCT/AT2020/060277**

(87) Internationale Veröffentlichungsnummer:
**WO 2021/011981 (28.01.2021 Gazette 2021/04)**

(54) **MESSSYSTEM UND VERFAHREN ZUR BESTIMMUNG EINES BREMSMOMENTS**

MEASURING SYSTEM AND METHOD FOR DETERMINING A BRAKING TORQUE

SYSTÈME DE MESURE ET MÉTHODE POUR DÉTERMINER UN COUPLE DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2019  AT 506712019**

(43) Veröffentlichungstag der Anmeldung:
**01.06.2022   Patentblatt 2022/22**

(73) Patentinhaber: **Piezocryst Advanced Sensorics GmbH**
**8020 Graz (AT)**

(72) Erfinder:
• **GERSTL, Erik**
**8010 Graz (AT)**
• **SCHRICKER, Alexander**
**8046 Graz (AT)**
• **HIRSCHLER, Michael**
**8020 Graz (AT)**

(74) Vertreter: **Hahner, Ralph**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
EP-A1- 3 472 012      EP-B1- 3 472 012
DE-A1- 4 024 811      ES-A1- 2 696 248
KR-A- 20090 057 640   SE-C2- 532 882
US-A1- 2017 082 163

**Beschreibung**

Die Erfindung betrifft ein Messsystem zur Bestimmung eines Bremsmoments zwischen einer feststehenden Bremseinrichtung und einem abzubremsenden drehbeweglichen Bremselement, wobei das Messsystem wenigstens ein Piezoelement und eine Signalverarbeitungseinrichtung aufweist.

Im Laufe der Entwicklung des Automobilbaus wurden die Funktionen einer Fahrzeugbremse, deren Hauptaufgabe eine Verringerung der Fahrzeuggeschwindigkeit ist, durch eine Vielzahl von Zusatzfunktionen, wie Antiblockiersystem, elektronisches Stabilitätsprogramm oder auch das sogenannte Break-Disc-Wiping, das bei Regen die Bremsbeläge an die Scheibe anlegt und sie dadurch trocknet, erweitert. Gleichzeitig sind die Anforderungen an die Fahrzeugbremsen gestiegen: In Testläufen müssen zehn direkt aufeinanderfolgende Vollbremsungen ausgehend von einer Geschwindigkeit von 100 km/h erfüllt werden, wobei die Ansprüche an eine Komfortbremse einzuhalten sind. Beispielsweise darf nicht einmal ein kurzzeitiges Quietschen auftreten. Dies wird von dem Fahrzeughalter heute als nicht akzeptabel wahrgenommen. Gleichzeitig sollen Verschleiß der Bremse geringgehalten werden und Fehlfunktionen frühzeitig erkannt werden.

Im Stand der Technik ist es bekannt, Kraftmessungen in Scheibenbremsen durchzuführen, indem die Kraft, welche von den Bremsbelägen auf die Bremsscheibe ausgeübt wird, zu messen, vgl. beispielsweise in der Veröffentlichung "Messverfahren zur Analyse der Bremsvorgänge bei Scheibenbremsen" ATZ 11/2008. Jahrgang 110 S.. 1030 ff.

Das Dokument US 2017/082163 A1 bezieht sich auf Systeme, Vorrichtungen und Verfahren zur Analyse und Verwaltung von Daten, die von mit Sensoren ausgestatteten Fahrzeugbremssystemer erzeugt werden. Das Dokument offenbart mindestens einen piezokeramischen Druck- und/ oder Scherkraftsensor, der zwischen einem Block aus Reibmaterial und einem metallischen Trägerelement angeordnet und so konfiguriert ist, dass er Sensordaten ausgibt, die ein Bremsmoment anzeigen oder zur Bestimmung eines Bremsmoments verwendet werden können, und eine zentrale Steuereinheit, die so konfiguriert ist, die Sensordaten zu empfangen.

Die Dokumente KR 2009 0057640 A, EP 3 472 012 A1 und DE 40 24 811 A1 beziehen sich auf weitere Messsysteme und Verfahren zur Bestimmung eines Bremsmomentes unter Verwendung von Piezoelementen.

Es ist eine Aufgabe der Erfindung, ein Messsystem, eine entsprechende Messanordnung und ein entsprechendes Verfahren anzugeben, mit welchen das Bremsmoment einer feststehenden Bremseinrichtung und eines abzubremsenden drehbeweglichen Bremselements bestimmt werden kann. Insbesondere ist es eine Aufgabe der Erfindung, ein verbessertes Messsystem, eine verbesserte Messanordnung und ein verbessertes Verfahren zur Bestimmung dieses Bremsmoments anzugeben.

Diese Aufgabe wird gelöst durch ein Messsystem nach Anspruch 1, eine Messanordnung nach Anspruch 7 und ein Verfahren nach Anspruch 10. Vorteilhafte Ausgestaltungen werden in den Unteransprüchen angegeben.

Ein erster Aspekt der Erfindung betrifft ein Messsystem zur Bestimmung eines Bremsmoments zwischen einer feststehenden Bremseinrichtung und einem abzubremsenden drehbeweglichen Bremselement, insbesondere einer Bremsscheibe. Erfindungsgemäß weist das Messsystem ein Piezoelement und eine Signalverarbeitungseinrichtung auf, wobei das Piezoelement in der Weise in einem Kraftfluss zwischen dem Bremselement und einem Gegenlager, welches die Bremseinrichtung abstützt, anordenbar ist, dass bei Einwirken einer Kraft in Bewegungsrichtung des Bremselements auf das Piezoelement ein Messsignal unter Ausnutzung eines piezoelektrischen , Schereffekts, des Piezoelements erzeugt wird, wobei der Kraftfluss durch Reibkraftschluss in das Piezoelement einleitbar ist. Weiter ist erfindungsgemäß die Signalverarbeitungseinrichtung dazu eingerichtet, auf der Grundlage des Messsignals das Bremsmoment in Bezug auf die Bewegungsrichtung des Bremselements zu bestimmen.

Ein zweiter Aspekt der Erfindung betrifft eine Messanordnung zur Bestimmung eines Bremsmoments aufweisend ein Messsystem, eine Bremseinrichtung, ein abzubremsendes bewegliches Bremselement und ein Gegenlager,

Ein dritter Aspekt der Erfindung betrifft ein Verfahren zur Bestimmung eines Bremsmoments, welches beim Bremsen zwischen einer feststehenden Bremseinrichtung und einem abzubremsenden drehbeweglichen Bremselement, insbesondere einer Bremsscheibe, übertragen wird, wobei wenigstens ein Piezoelement in der Weise in einem Kraftfluss zwischen dem Bremselement und einem Gegenlager, welches die Bremseinrichtung abstützt, angeordnet ist, dass bei Einwirken einer Kraft in Bewegungsrichtung des Bremselements auf das Piezoelement ein Messsignal unter Ausnutzung eines piezoelektrischen Schereffekts, des Piezoelements erzeugt wird, wobei der Kraftfluss durch Reibkraftschluss in das Piezoelement einleitbar ist. Erfindungsgemäß wird auf der Grundlage des Messsignals das Bremsmoment in Bezug auf die Bewegungsrichtung des Bremselements bestimmt.

Ein Piezoelement ist ein Messelement, welches ein Messsignal auf der Grundlage des piezoelektrischen Effekts erzeugt.

Eine Signalverarbeitungseinrichtung im Sinne der Erfindung ist vorzugsweise ein Gerät, um Informationen aus einem Messsignal zu extrahieren. Weiter vorzugsweise weist die Signalverarbeitungseinrichtung eine Datenverarbeitungseinrichtung auf.

Ein Bremsmoment im Sinne der Erfindung ist jenes Moment, welches einer Drehbewegung der Räder eines Fahrzeugs beim Bremsen entgegenwirkt.

Eine Bremseinrichtung im Sinne der Erfindung kann mit einem Bremselement vorzugsweise mechanisch zusammenwirken. Weiter vorzugsweise kann die Bremseinrichtung mit dem Bremselement elektromagnetisch zusammenwirken.

Die Erfindung beruht insbesondere auf dem Ansatz, das zwischen einer feststehenden Bremseinrichtung und einem abzubremsenden, drehbeweglichen Bremselement anliegende Drehmoment über die Kraft, mit der sich die Bremseinrichtung, insbesondere eine Bremszange, an einem Gegenlager, insbesondere einem Bremsträger, abstützt, zu bestimmen.

Durch das oder die Piezoelemente können solche dynamischen Reaktionskräfte mit hoher Empfindlichkeit bestimmt werden. Insbesondere kann ein Residual-Bremsmoment, auch Restbremsmoment genannt, auf der Grundlage der dynamischen Kraftmessung durch die Piezoelemente bestimmt werden. Dieses gibt beispielsweise Auskunft darüber, ob eine Bremseinrichtung mit dem Bremselement bereits in Kontakt ist und wenn ja, wie stark. Des Weiteren können der oder die Schleifpunkte der Bremseinrichtung an dem Bremselement bestimmt werden. Auf diese Weise lassen sich durch die erfindungsgemäße Lehre Fehlfunktionen eines Bremssystems zuverlässig detektieren und insbesondere Schäden am Fahrzeug aufgrund teilweise geschlossener Bremsen im Fahrbetrieb sowie der damit verbundene höhere Energieverbrauch im Fahrbetrieb vermeiden.

Erfindungsgemäß wird dabei mittels der Piezoelemente unmittelbar die Kraft in Bewegungsrichtung des Bremselements bestimmt. Ist der Abstand des oder der Piezoelemente von einer Drehachse des Bremselements bekannt, kann mittels einfacher mathematischer Berechnung auch unmittelbar das Bremsmoment bestimmt werden. Weitere Annahmen zur Berechnung des Bremsmoments müssen nicht getroffen werden. Insbesondere geht kein Reibwert und kein Reibradius bei der Bestimmung des Bremsmoments bzw. der Kraft in Bewegungsrichtung des Bremselements ein, welche das Ergebnis verfälschen könnten.

In einer vorteilhaften Ausgestaltung des Messsystems ist der Kraftfluss durch einen Kraftschluss mittels Haftreibung in das Piezoelement einleitbar.

Auf diese Weise kann/können das oder die Piezoelemente einfach in bestehende Konstruktionen von Bremssystemen integriert werden, beispielsweise dort, wo die Bremseinrichtung mittels Befestigungsmitteln, z. B. Schrauben, an einem Gegenlager befestigt ist. In einer weiteren vorteilhaften Ausgestaltung des Messsystems ist eine Ausrichtung einer Vorzugsrichtung des Piezoelements bekannt. Dies hat zum Vorteil, dass auf der Grundlage der Intensität eines Messsignals unmittelbar auf die zugrundeliegende Kraft geschlossen werden kann. Insbesondere ist mit der Ausrichtung der Vorzugsrichtung bekannt, in welcher Richtung die maximale Intensität des Messsignals bei einer Kraftmessung auftritt. In einer weiteren vorteilhaften Ausgestaltung ist die Vorzugsrichtung des Piezoelements tangential zu der Bewegungsrichtung des Bremselements in einem zentralen Angriffspunkt der Bremseinrichtung an das Bremselement. Durch diese Ausgestaltung wird bei der Messung der Kraft in Bewegungsrichtung des Bremselements die maximale Messintensität des wenigstens einen Piezoelements ausgenutzt.

In einer weiteren vorteilhaften Ausgestaltung weist das Messsystem wenigstens zwei Piezoelemente auf, wobei die Vorzugsrichtungen der Piezoelemente in einer einzigen Ebene liegen und vorzugsweise parallel ausgerichtet sind. Hierdurch lässt sich eine besonders hohe Messgenauigkeit erreichen.

In einer weiteren vorteilhaften Ausgestaltung weist das Messsystem wenigstens drei Piezoelemente auf, wobei die Signalverarbeitungseinrichtung des Weiteren eingerichtet ist, das Bremsmoment mittels einer, insbesondere orthogonalen, Zerlegung von Messsignalen oder Kraftmessungen der einzelnen Piezoelemente in Anteile, welche zu den jeweiligen abzuleitenden Kraftkomponenten und/oder Drehkomponenten beitragen, zu bestimmen, wobei, insbesondere alle, Beiträge der einzelnen Piezoelemente zu den jeweiligen abzuleitenden Kraftkomponenten und/oder Drehkomponenten berücksichtigt werden. Auch durch diese Maßnahme lässt sich eine besonders exakte Bestimmung des Bremsmoments erreichen. Insbesondere können Kraftnebenschlüsse außerhalb der Piezoelemente verringert oder sogar verhindert werden.

In einer weiteren vorteilhaften Ausgestaltung des Messsystems ist die Signalverarbeitungseinrichtung des Weiteren dazu eingerichtet, das ausschließlich Bremsmoment auf der Grundlage des Messsignals und einer Position des wenigstens einen Piezoelements in Bezug auf eine Drehachse des Bremselements zu bestimmen. Hierdurch lässt sich das Bremsmoment in einfacher Weise ohne vereinfachte Annahmen bestimmen.

Die im Vorhergehenden für den Aspekt eines Messsystems geschilderten Vorteile und Merkmale gelten entsprechend auch für die Aspekte einer Messanordnung und eines Verfahrens zur Bestimmung eines Bremsmoments und umgekehrt.

In einer vorteilhaften Ausgestaltung der Messanordnung ist das Gegenlager eine Abstützvorrichtung der Bremseinrichtung, insbesondere ein sogenannter Stator.

In einer weiteren vorteilhaften Ausgestaltung der Messanordnung ist das wenigstens eine Piezoelement zwischen der Bremseinrichtung und dem Gegenlager, vorzugsweise mit einer Vorspannung belastet, angeordnet. Die Position zwischen Bremseinrichtung und Gegenlager eignet sich besonders gut für die Anordnung der Piezoelemente. Insbesondere ist die Bremseinrichtung selbst kein bewegtes Bauteil, so dass an dieser Stelle eine zuverlässige Verbindung durch die Piezoelemente hergestellt werden kann.

**EP 4 004 395 B1**

In einer weiteren vorteilhaften Ausgestaltung der Messanordnung sind die Piezoelemente bezüglich einer Drehachse des Bremselements im jeweils gleichen radialen Abstand angeordnet.

In einer weiteren vorteilhaften Ausgestaltung der Messanordnung ist eine Stirnfläche des wenigstens einen Piezoelements im Wesentlichen senkrecht zu einer Ebene des Bremselements angeordnet. Hierdurch lässt sich eine besonders platzsparende Anordnung des Piezoelements, vorzugsweise zwischen zwei Bauteilen der Bremseinrichtung, beispielsweise zwischen einer Belagträgerplatte und einer Rückenplatte der Bremseinrichtung, realisieren.

In einer vorteilhaften Ausgestaltung des Verfahrens weist dieses die folgenden Arbeitsschritte auf:

Betätigen der Bremseinrichtung mit einer definierten Intensität; und

Bestimmen der Intensität des Betätigens, ab welcher ein Schwellwert für das Messsignal oder das Bremsmoment erreicht ist.

Durch diese vorteilhafte Ausgestaltung kann ein Wert für die Betätigungsintensität festgelegt werden, bei welchem ein Schwellwert des Residual-Bremsmoments überschritten wird. Insbesondere kann auf der Grundlage einer solchen Messung ein Betätigungsoffset-Wert für die Bremseinrichtung oder ein Bremssystem festgelegt werden. Insbesondere kann ein optimaler Wert für die Betätigung bestimmt werden, bei welchem die Bremseinrichtung noch keine Bremswirkung auf das Bremselement ausübt, jene Elemente, welche mit dem Bremselement zusammenwirken, zum Beispiel die Bremsbacken, sich jedoch möglichst nah an dem Bremselement befinden.

Insbesondere kann eine Veränderung der Bremswirkung in Abhängigkeit von der Betriebszeit, ein sogenanntes Fading, auf diese Weise erkannt werden. Ein Grund hierfür ist beispielsweise die Abnutzung der Bremsbeläge bei einer Scheibenbremse.

In einer weiteren vorteilhaften Ausgestaltung des Verfahrens kann diese Information als Grundlage für die Adaptierung der Bremseinrichtung bilden, um die Bremswirkung über die Einsatzdauer für den Bediener konstant zu halten.

In einer weiteren vorteilhaften Ausgestaltung des Verfahrens ist der Schwellwert dann erreicht, wenn eine Intensität des Messsignals von einer Rotationsgeschwindigkeit des Bremselements, insbesondere proportional, abhängig ist. Durch die Abhängigkeit von der Rotationsgeschwindigkeit des Elements kann eindeutig festgestellt werden, dass die Änderung des Messsignals durch ein Zusammenwirken des Bremselements mit der Bremseinrichtung verursacht wird.

In einer weiteren vorteilhaften Ausgestaltung des erfindungsgemäßen Verfahrens sind wenigstens zwei Piezoelemente in dem Kraftfluss angeordnet, wobei das Verfahren folgende Arbeitsschritte aufweist:

Betätigen der Bremseinrichtung mit einer definierten Intensität;

Vergleichen der Messsignale der Piezoelemente zueinander, insbesondere im betätigten Zustand der Bremseinrichtung; und

Bestimmen eines Offset-Werts für wenigstens eines der Messsignale auf der Grundlage des Vergleichens.

Vorzugsweise geschieht das Vergleichen durch Addition oder Subtraktion der Messsignale oder von aus diesen abgeleiteten Kraftwerten.

Durch den Offset-Wert kann insbesondere festgestellt werden, ob die wenigstens zwei Piezoelemente gegeneinander verspannt sind, zum Beispiel durch eine thermische Ausdehnung im Bereich der Bremseinrichtung. Der Betrag des Offset-Werts ist ein Maß für einen Temperaturgradient zwischen den beiden Bauteilen, an welche die Piezoelement angrenzen. Das Vorzeichen des Offset-Werts gibt die Richtung des Wärmeflusses zwischen den Bauteilen an. Der Temperaturgradient ist vorzugsweise auch davon abhängig, welche Ausdehnungskoeffizienten die beiden an die Sensoren angrenzenden Materialien haben.

In einer weiteren vorteilhaften Ausgestaltung des Verfahrens wird das Bremsmoment, welches tangential zur Bewegungsrichtung des Bremselements wirkt, mittels Messungen von Reaktionskräften, welche durch ein Gegenlager der Bremseinrichtung bereitgestellt werden, durch wenigstens ein Piezoelement bestimmt.

In einer weiteren vorteilhaften Ausgestaltung des Verfahrens werden Kraftkomponenten und Drehmomentkomponenten mittels eines Gleichungssystems auf der Grundlage von Messsignalen der einzelnen Piezoelemente bestimmt. Hierbei werden die Messsignale oder die aus diesen Messsignalen abgeleiteten Kräfte auf der Grundlage einer Vektorzerlegung, insbesondere einer orthogonalen Zerlegung, in verschiedene Komponenten aufgeteilt.

Vorzugsweise werden hierbei die Messsignale der einzelnen Piezoelemente in Anteile, welche zu den jeweiligen abzuleitenden Kraftkomponenten und/oder Drehkomponenten beitragen, zerlegt.

In einer weiteren vorteilhaften Ausgestaltung des erfindungsgemäßen Verfahrens wird ein an der Bremseinrichtung anliegendes Drehmoment aus den abgeleiteten Kraftkomponenten und/oder Drehmomentkomponenten bestimmt.

In einer weiteren vorteilhaften Ausgestaltung des erfindungsgemäßen Verfahrens wird ein an der Bremsein-

4

richtung anliegendes Bremsmoment aus den zusammengefassten Komponenten abgeleitet.

In einer weiteren vorteilhaften Ausgestaltung des Verfahrens ist ein Abstand zu einer Drehachse des Bremselements für jedes Piezoelement bekannt und zur Ermittlung eines an der Bremseinrichtung anliegenden Bremsmoments wird dieser Abstand herangezogen.

In einer weiteren vorteilhaften Ausgestaltung des Verfahrens kann mittels der Messungen an den Piezoelementen alternativ oder zusätzlich zum Bremsmoment eine Kraftverteilung zwischen den einzelnen Lagerpunkten der Bremseinrichtung, welche vorzugsweise von den Piezoelementen gebildet werden, bestimmt werden. Es hängt von einer Auslegung der Bremseinrichtung ab, ob die Piezoelemente gleich viel Kraft aufnehmen. Beispielhaft könnte ein Piezoelement fast die gesamte Bremskraft aufnehmen, wohingegen ein zweites Piezoelement nur eine Lage senkrecht zur Drehrichtung des Bremselements fixiert. Durch eine Kalibrierung im Betrieb kann vorzugsweise das Verhältnis der Sensoren an der Bremswirkung, insbesondere dem Bremsmoment, bestimmt werden.

Vorzugsweise werden die Messsignale der einzelnen Piezoelemente darüber hinaus aufgrund von Empfindlichkeitsunterschieden zwischen den Piezoelementen korrigiert, insbesondere werden diese mit einem konstanten Faktor multipliziert. Ein weiterer konstanter Faktor, welcher bei vorzugsweise der Korrektur berücksichtigt wird ist die Geometrie des Messsystems oder der Messanordnung.

In einer weiteren vorteilhaften Ausgestaltung des Verfahrens wird der Radkontakt mit dem Untergrund beim Bremsen bestimmt, indem die Intensität einer Bremsbetätigung, insbesondere die Spannkraft bei einer Bremszange, mit dem bestimmten Bremsmoment abgeglichen wird. Ein Abheben des Rads beim Bremsvorgang und wieder Aufsetzen führt zu starken Schwankungen im Bremsmoment. Ist die Bremsbetätigung konstant, so kann darauf geschlossen werden, dass der Radkontakt variiert. Der Radkontakt kann hierbei von dem Reibkontakt zur Straße abhängen: Zum Beispiel beim Übergang von Haft- in Gleitreibung der Reifen. Ein Vergleich der Bremsmomente im Fahrzeugverbund, d.h. aller Radbremsen, kann zur Fahrdynamikregelung genutzt werden.

In einer weiteren vorteilhaften Ausgestaltung des Verfahrens kann alternativ oder zusätzlich zu dem Bremsmoment eine Vertikalbeschleunigung des Radträgers bestimmt werden. Vorzugsweise wird hierfür die Masse der Bremseinrichtung herangezogen. Weiter vorzugsweise wird die Kraftmessung in unbetätigtem Zustand der Bremseinrichtung durchgeführt.

Weitere Merkmale und Vorteile ergeben sich aus der nachfolgenden Beschreibung der Figuren. Es zeigen wenigstens teilweise schematisch:

**Fig. 1** ein Ausführungsbeispiel einer Messanordnung, in welcher ein Messsystem installiert ist;

**Fig. 2** ein Ausführungsbeispiel eines Messsystems;

**Fig. 3** ein Ausführungsbeispiel eines Verfahrens zur Bestimmung eines Bremsmoments; und

**Fig. 4** ein Diagramm eines zeitlichen Ablaufs einer Winkelgeschwindigkeit und eines Bremsmoments.

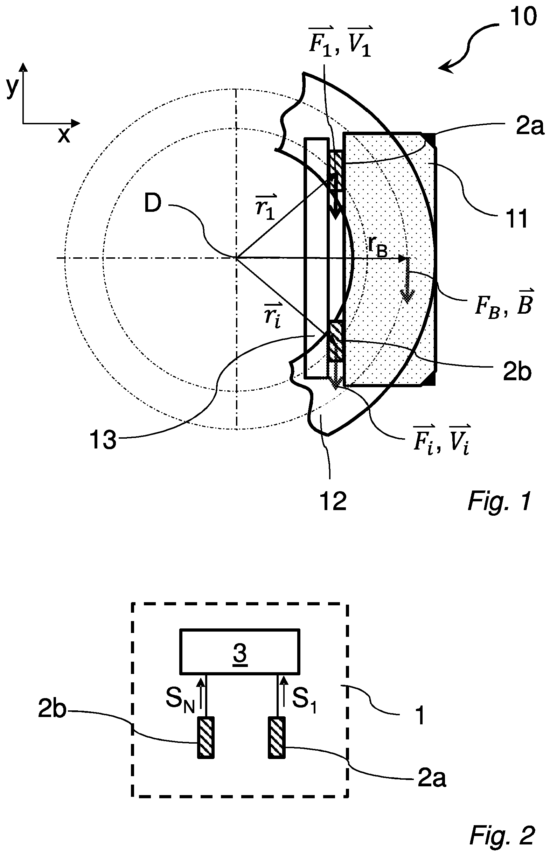

**Fig. 1** zeigt ein Ausführungsbeispiel einer Messanordnung 10, in welcher ein Bremsmoment zwischen einer feststehenden Bremseinrichtung 11 und einem abzubremsenden drehbeweglichen Bremselement 12 bestimmt werden kann.

Das Ausführungsbeispiel stellt dabei eine Scheibenbremse 10 dar, wobei das abzubremsende drehbewegliche Bremselement 12 eine Bremsscheibe ist und die Bremseinrichtung 11 eine Bremszange mit einem Bremssattel aufweist, welche beim Bremsen mit der Bremsscheibe 12 über Bremsbeläge (nicht dargestellt) in reibschlüssigen Kontakt tritt.

Die Bremszange 11 wird an einem Gegenlager 13, welches beispielsweise mit einem Radträger eines Fahrzeugs fest verbunden ist, gelagert. Der feststehende Teil einer Radbremse, welcher vorzugsweise mit dem Radträger verbunden ist, wird im Allgemeinen Stator genannt.

Piezoelemente 2a, 2b eines Messsystems 1 sind bei dieser Messanordnung vorzugsweise zwischen der Bremszange 11 und dem Gegenlager 13 angeordnet. Vorzugsweise sind die Piezoelemente 2a, 2b kraftschlüssig, insbesondere reibschlüssig, mit dem Gegenlager 13 und der Bremszange 11 verbunden. Um zwischen der Bremszange 11 und dem Gegenlager 13 eine Spannkraft zu erzeugen, ist vorzugsweise eine Schraubverbindung mit einer oder mehreren Schrauben vorgesehen (nicht dargestellt).

Bei einem Bremsvorgang wird ein Kraftfluss ausgehend von der Bremsscheibe 12 über die Bremsbeläge der Bremszange 11, die Bremszange 11 selbst, die Piezoelemente 2a, 2b an das Gegenlager 13 übertragen. Dieses Gegenlager 13 stellt eine Reaktionskraft für eine durch diesen Kraftfluss übertragene Bremskraft $F_B$ bereit.

Die Bremskraft $F_B$ wirkt in Bewegungsrichtung B des Bremselements. Die Bremskraft $F_B$ verursacht daher in Bezug auf die Drehachse D der Bremsscheibe 12 ein Bremsmoment $M_B$.

Das zugehörige Bremsmoment $M_B$ ergibt sich aus der nachfolgenden Gleichung mittels eines Kreuzprodukts:

$$\overrightarrow{M_B} = \overrightarrow{r_B} \times \overrightarrow{F_B}$$

$\overrightarrow{r_B}$ ist hierbei der Ortsvektor von der Drehachse zu dem Hauptangriffspunkt eines Bremsbelags an der Bremsscheibe 12. Die Wirkungsrichtung dieses Bremsmoments $\overrightarrow{M_B}$ ist senkrecht zu der Drehebene, in welcher sich die Bremsscheibe 12 dreht bzw. in welcher die Bewegungsrichtung B der Bremsscheibe 12 liegt. Die Bremskraft $\overrightarrow{F_B}$, welche von der Bremsscheibe 12 auf die Bremszange 11 ausgeübt wird, entspricht einer über die gesamte Kontaktfläche zwischen der Bremsscheibe 12 und der Bremszange 11 aufintegrierte Kraftwirkung.

Entsprechend der Bremskraft $F_B$ bzw. des Bremsmoments $M_B$ wirkt bei einem Bremsvorgang auf die Piezoelemente 2a, 2b jeweils eine Kraft $F_1$ bzw. $F_i$. Diese jeweiligen Kräfte $F_1$ bzw. $F_i$ sind in Richtung der Bremskraft $F_B$ gerichtet.

Im dargestellten Ausführungsbeispiel ist die Bremskraft $F_B$ parallel zu den Stirnflächen der Piezoelemente 2a, 2b ausgerichtet. Dementsprechend sind auch die jeweiligen anteiligen Kräfte $F_1$ und $F_i$ parallel zur Stirnfläche der jeweiligen Piezoelemente 2a, 2b ausgerichtet.

In vorteilhafter Weise werden in dem dargestellten Ausführungsbeispiel daher Piezoelemente 2a, 2b eingesetzt, welche den piezoelektrischen Scher-Effekt zur Messung von Kräften einsetzen. Die Vorzugsrichtung $V_1$, $V_i$ ist vorzugsweise, wie in dem in Fig. 1 gezeigten Ausführungsbeispiel parallel zu den zu erwartenden anteiligen Kräften $F_1$, $F_i$ ausgerichtet. Mittels dieser Ausrichtung kann eine maximale Ausbeute an Messsignal erreicht werden.

Alternativ können die Vorzugsrichtungen $V_1$, $V_i$ aber auch verschieden von dem jeweils auf die Piezoelemente 2a, 2b wirkenden Kräften $F_1$, $F_2$ ausgerichtet sein. In diesem Fall erzeugen die anliegenden Kräfte $F_1$, $F_i$ nur anteilig Messsignale. Gegebenenfalls muss die Messanordnung 10 in diesem Fall auf die Ausrichtung der Vorzugsrichtung $V_1$, $V_i$ der Piezoelemente 2a, 2b justiert werden.

Weiter alternativ ist es möglich, dass die Bremszange 11 und das Gegenlager 13 in der Weise ausgebildet sind, dass ein Kraftfluss formschlüssig auf die Piezoelemente 2a, 2b übertragen wird. In diesem Fall nutzen die Piezoelemente 2a, 2b vorzugsweise den piezoelektrischen Transversaleffekt oder den piezoelektrischen Longitudinaleffekt aus.

In einer weiteren alternativen Ausgestaltung des Ausführungsbeispiels der Fig. 1 können die Stirnflächen der Piezoelemente 2a, 2b statt, wie in Fig. 1 gezeigt, senkrecht zur Drehebene der Bremsscheibe 12 in einem anderen Winkel zu der Drehebene der Bremsscheibe 12 angeordnet sein, beispielsweise parallel. Dies kann beispielsweise bei Geometrien in Messanordnungen sinnvoll sein, bei welchen das Gegenlager 13 in Bezug auf die Bremszange 11 nicht in radialer Richtung zur Drehachse D des Bremselements der Bremsscheibe 12 angeordnet ist, sondern in axialer Richtung zur Drehachse D. Auch können die Piezoelemente 2a, 2b in einer alternativen Ausgestaltung nicht zwischen der Bremszange 11 und dem Gegenlager 13 angeordnet sein, sondern zwischen Elementen der Bremszange 11, beispielsweise zwischen den Bremsbelägen und einem Aktor der Bremszange 11.

Auf der Grundlage der Kraftmessung an den Piezoelementen 2a, 2b und den Positionen der einzelnen Piezoelemente 2a, 2b, welche in Bezug auf die Drehachse D der Bremsscheibe 12 in Fig. 1 durch die $r_1$ und $r_i$ definiert werden, kann das Drehmoment $M_B$ wie folgt berechnet werden:

$$\overrightarrow{M}_B = \sum_{i=1}^{N} \overrightarrow{r_i} \times \overrightarrow{F_i}$$

Auch andere Verfahren zur Bestimmung des Bremsmoments $B_M$ können zum Einsatz kommen. Beispielsweise eine Zerlegung, insbesondere orthogonale Zerlegung, der Messsignale der einzelnen Piezosensoren 2a, 2b oder der aus den Messsignalen abgeleiteten, das heißt gemessenen Kräfte $F_1$, ..., $F_i$.

Eine solche Zerlegung kann beispielsweise von Interesse sein, wenn jeweils zwei Scher-Piezoelemente an jedem Befestigungspunkt in der Weise angeordnet sind, dass auch Kräfte normal zur Bremsrichtung gemessen werden können. Solche normalen Kräfte können zum Beispiel durch Verwinden der Radträger, an welchen die Bremseinrichtung installiert ist, entstehen.

Hierbei sind die zu bestimmenden Parameter $M_B$, $F_X$, $F_Y$ die Lösung eines Gleichungssystems, wobei für jedes Messsignal eine Gleichung wie folgt gilt:

$$S1 = a_{11} \cdot M_B + a_{12} \cdot Fx + a_{13} \cdot Fy$$

$$S2 = a_{21} \cdot M_B + a_{22} \cdot Fx + a_{23} \cdot Fy$$

$$S3 = a_{31} \cdot M_B + a_{32} \cdot Fx + a_{33} \cdot Fy$$

$$\vdots$$

$$SN = a_{N1} \cdot M_B \ldots$$

S1, S2, ...Si,..., SN sind hierbei die Messsignale der einzelnen Piezoelemente 2a, 2b, ...2, N. Jeder Koeffizient a hängt von mehreren Faktoren ab, wie beispielsweise der jeweiligen Position des Piezoelements 2a, 2b, ...2, N und der Orientierung der jeweiligen Vorzugsrichtung V1, V2,..., Vi,...,VN im Bezugssystem, einer Empfindlichkeit des jeweiligen Piezoelements 2a, 2b,..., 2i,...,2N und einem möglichen Signalverlust durch einen Kraftnebenschluss über ein Befestigungsmittel.

Um ein solches Gleichungssystem für das Bremsmoment $M_B$, eine erste Querkraftkomponente Fx und eine zweite Querkraftkomponente Fy aufzulösen, werden Messsignale von wenigstens drei Piezoelemente 4a, 4b, 4c, deren Vorzugsrichtungen $V_a$, $V_b$, $V_c$ in der Weise ausgerichtet sind, dass sie in einer einzigen Ebene liegen, benötigt. Darüber hinaus dürfen wenigstens zwei der Vorzugsrichtungen $V_a$, $V_b$, $V_c$ weder parallel noch antiparallel ausgerichtet sein.

Für diesen beschriebenen allgemeinen Fall mit N = 3, d. h. mit drei Piezoelementen 2a, 2b, 2c, ist die Lösung des oben dargestellten Gleichungssystems eindeutig. Werden weitere Piezoelemente zu dem Messsystem 1 hinzugefügt, so ist das Gleichungssystem mit drei zu bestimmenden Parametern $M_B$, Fx, Fy überbestimmt, die Messgenauigkeit kann jedoch nochmals verbessert werden.

Im Fall von N = 4 können vier verschiedene Gleichungssysteme F (S1, S2, S3), F (S1, S2, S4), F (S1, S3, S4), F (S2, S3, S4) aufgestellt werden. Die für die einzelnen zu bestimmenden Parameter $M_B$, Fx, Fy bestimmten Werte können dann addiert und gemittelt werden, d. h. in dem Fall von vier Piezoelementen 2a, 2b, ..., 2i,...,2N durch vier dividiert werden. In ähnlicher Weise kann ein überbestimmtes Gleichungssystem F (S1, S2, ..., SN) aufgestellt werden, welches mittels einer Minimierungsaufgabe gelöst wird.

Ist eine allgemeine Lösung für das Gleichungssystem gefunden, kann die Berechnung der zu bestimmenden Parameter Fx, Fy, $M_B$ auf eine Matrixmultiplikation reduziert werden. Diese hat drei Zeilen und so viele Spalten, wie Messsignale S1, S2, S3, ... SN zur Verfügung stehen. Die Matrixelemente bzw. Koeffizienten bilden die jeweiligen Beiträge der einzelnen Sensoren zu den zu bestimmenden Parametern Fx, Fy, $M_B$ ab.

$$\begin{pmatrix} Fx \\ Fy \\ MB \end{pmatrix} = K \begin{pmatrix} c11 & c12 & c13 & \ldots c1\,N \\ c21 & c22 & c23 & \ldots c2\,N \\ c31 & c32 & c33 & \ldots c3\,N \end{pmatrix} \begin{pmatrix} s1 \\ s2 \\ s3 \\ \ldots sN \end{pmatrix}$$

Für die Zerlegung der Messsignale S1, S2,...Si,..., SN in Komponenten, welche zu den jeweiligen zu bestimmenden Parametern $M_B$, Fx, Fy beitragen, ist es notwendig, dass die Lage der Piezoelemente 2a, 2b,..., 2i,...,2N und die Orientierung der Vorzugsrichtungen V1, V2,..., Vi,...,VN bekannt ist.

Die geometrischen Parameter können entweder aus einer Konstruktionszeichnung eines Messsystems 1 und aus der Kenntnis der Vorzugsrichtungen der Piezoelemente 2a, 2b, ..., 2i, ..., 2N bestimmt werden.

Die Orientierung der Vorzugsrichtungen V1, V2, ..., Vi, ..., VN der Piezoelemente 2a, 2b,..., 2i,...,2N kann jedoch auch durch Ausmessen der Vorzugsrichtungen V1, V2,..., Vi, ...,VN mittels einer Kalibrierungsmessung bestimmt werden. Vorzugsweise wird das Messsystem 1 hierfür zwischen zwei ebene Platten eingespannt. In einem nächsten Schritt werden externe Querkräfte mit bekannter Richtung aufgebracht. Aus der Größe der einzelnen Messsignale S1, S2,... Si,..., SN im Verhältnis zum Betrag und zu der Richtung der eingeleiteten Querkräfte kann die Vorzugsrichtung V1, V2,..., Vi, ..., VN der Piezoelemente 2a, 2b,..., 2i,...,2N in der Ebene, welche durch die Vorzugsrichtung $V_1$, V2,..., Vi, ...,VN der Piezoelemente 2a, 2b,..., 2i,...,2N aufgespannt wird, bestimmt werden.

in ähnlicher Weise kann durch das Aufbringen eines definierten Bremsmoments $M_B$ und das Messen der einzelnen Messsignale S1, S2,...Si,..., SN ein Abstand $r_1$, $r_2$,... $r_i$,..., $r_N$ der Piezoelemente 2a, 2b,..., 2i,...,2N von einer Drehachse D bestimmt werden, wenn die Vorzugsrichtungen V1, V2,..., Vi, ..., VN der einzelnen Piezoelemente 2a, 2b,...,

2i,...,2N bekannt sind.

**Fig. 2** zeigt ein Ausführungsbeispiel eines Messsystems 1, welches in einer Messanordnung nach Fig. 1 zum Einsatz kommen kann. Im Wesentlichen weist ein solches Messsystem wenigstens ein Piezoelement, im gezeigten Ausführungsbeispiel zwei Piezoelemente 2a, 2b, auf, welche mit einer Signalverarbeitungseinrichtung 3 signaltechnisch in der Weise verbunden sind, dass Signale $S_1$, $S_N$ übertragen werden können. Die Signalverarbeitungseinrichtung 3 kann hierbei im Bereich einer Messanordnung 10 angeordnet sein, aber auch in einer zentralen Bremssteuereinrichtung eines Fahrzeugs.

Die Signalverarbeitungseinrichtung 3 ist insbesondere dazu eingerichtet, auf der Grundlage wenigstens eines Messsignals $S_1$, $S_2$, ..., $S_i$, ..., $S_N$ das Bremsmoment $M_B$ in Bezug auf die Bewegungsrichtung B des Bremselements 12 zu bestimmen.

insbesondere ist die Signalverarbeitungseinrichtung 3 eingerichtet, die in Bezug auf Fig. 1 beschriebenen Rechenoperationen zur Bestimmung des Bremsmoments $M_B$ auszuführen. Vorzugsweise weist die Signalverarbeitungseinrichtung 3 Mittel auf, um die jeweiligen Arbeitsschritte zur Berechnung des Bremsmoments $M_B$ auszuführen.

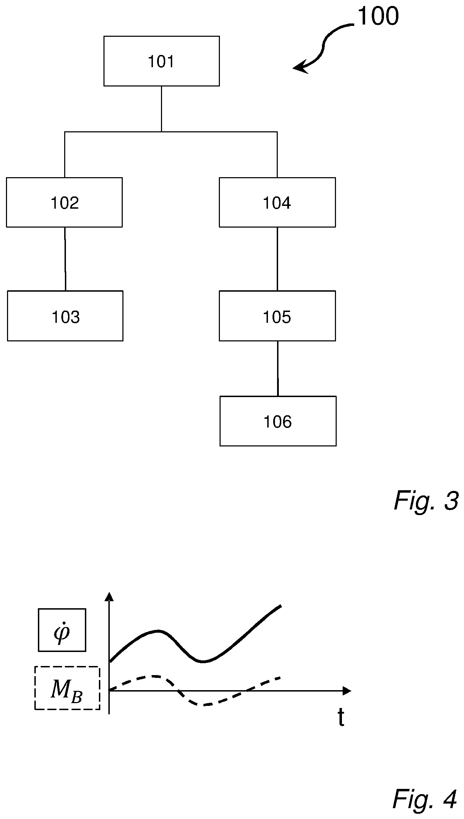

**Fig. 3** zeigt ein Blockdiagramm eines Verfahrens 100 zur Bestimmung eines Bremsmoments.

Die einzelnen Arbeitsschritte des Verfahrens werden hierbei vorzugsweise computerimplementiert von der Signalverarbeitungseinrichtung 3 ausgeführt.

Für ein Bestimmen eines Bremsmoments $M_B$ kommt hierbei vorzugsweise ein Messsystem 1, wie in Fig. 2 gezeigt, und/oder eine Messanordnung 10, wie in Fig. 1 gezeigt, zum Einsatz.

Bei dem erfindungsgemäßen Verfahren 100 wird auf der Grundlage des Messsignals $S_1$, ..., $S_i$, ..., $S_N$ von Piezoelementen 2a, 2b das Bremsmoment $M_B$ in Bezug auf die Bewegungsrichtung B der Bremsscheibe 12 bestimmt.

Vorzugsweise wird hierbei die Bremseinrichtung mit einer definierten Intensität betätigt 102, so dass jene Intensität der Betätigung bestimmt werden kann 103, ab welcher ein Schwellwert für das Messsignal $S_1$, ..., $S_i$, ..., $S_N$ oder das Bremsmoment $M_B$ erreicht ist. Diese bestimmte Intensität bzw. dieser Wert der Intensität gibt einen Schleifpunkt an, ab welchem die Bremszange 11 bzw. deren Bremsbeläge mit der Bremsscheibe 12 in reibschlüssigen Kontakt kommen. Durch das Bestimmen der Intensität kann mithin jene Stellung der Betätigung der Bremszange 11 bestimmt werden, bei welcher die Bremsbeläge möglichst nah an der Bremsscheibe 12 sind, jedoch noch keine Reibverluste auftreten.

Insbesondere wird ein Schleifpunkt in der Weise definiert, dass bei diesem die Intensität des Messsignals $S_1$, ..., $S_i$, ..., $S_N$ von einer Rotationgeschwindigkeit und der Reibkraft des Bremselements abhängig, insbesondere proportional, ist. Das Residual-Bremsmoment kann mit dem Verfahren 100 insbesondere bei oder nach einem Bremsvorgang durch einen Abgleich der Drehzahl der Bremsscheibe oder der Fahrgeschwindigkeit mit dem Bremsmoment bestimmt werden. Gibt es eine Korrelation mit der Drehzahl der Bremsscheibe, so liegen die Bremsbacken (noch) an der Bremsscheibe an. Die Korrelation dann mit dem Produkt aus Reibkoeffizient und der Spannkraft, mit der die Bremsbacken auf die Bremsscheibe gedrückt werden, in Beziehung gebracht werden.

Eine solche Abhängigkeit wird in Fig. 4 gezeigt. Dort sind die Rotationsgeschwindigkeit der Bremsscheibe 12 $\dot{\varphi}$ als durchgezogene Linie in Abhängigkeit von der Zeit und der entsprechend bestimmte Betrag des Bremsmoments $M_B$ in Abhängigkeit von der Zeit als gestrichelte Linie dargestellt. Auf dem Diagramm wird deutlich, dass das Bremsmoment $M_B$ von der Rotationsgeschwindigkeit $\dot{\varphi}$ abhängt, so dass der Schleifpunkt des Bremssystems bereits überschritten ist und eine reibschlüssige Verbindung zwischen dem Bremssattel und der Bremsscheibe 12 eingetreten ist.

Weiter vorzugsweise weist das Verfahren 100 vorzugsweise einen Arbeitsschritt des Betätigens der Bremszange 11 mit einer definierten Intensität auf 104. Die Messsignale $S_1$, ..., $S_i$, ..., $S_N$ der Piezoelemente 2a, 2b werden zueinander im betätigten Zustand der Bremseinrichtung verglichen 103, und in einem weiteren Arbeitsschritt wird ein Offset-Wert für wenigstens eines der Messsignale $S_1$, ..., $S_i$, ..., $S_N$ auf der Grundlage des Vergleichens bestimmt 106.

Die Unterschiede zwischen den einzelnen Messsignalen $S_1$, ..., $S_i$, ..., $S_N$ können ein Indikator dafür sein, dass die Piezoelemente 2a, 2b durch Elemente, an welchen diese gelagert sind, vorgespannt sind. Beispielsweise könnte in dem Ausführungsbeispiel nach Fig. 1 die Bremszange 11 in unbelastetem Zustand die beiden Piezoelemente 2a, 2b gegenüber dem Gegenlager 13 auseinanderdrücken oder umgekehrt. Dies könnte beispielsweise aufgrund von thermischen Einflüssen auf die Bremseinrichtung 11 oder auch das Gegenlager 13 verursacht sein.

Bei den beschriebenen Ausführungsbeispielen handelt es sich lediglich um Beispiele, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen ergibt. Insbesondere können einzelne Ausführungsbeispiele miteinander kombiniert werden.

**Patentansprüche**

**1.** Messsystem (1) zur Bestimmung eines Bremsmoments ($M_B$) zwischen einer feststehenden Bremseinrichtung (11)

und einem abzubremsenden drehbeweglichen Bremselement (12), insbesondere einer Bremsscheibe, wobei das Messsystem (1) wenigstens ein Piezoelement (2a, 2b) und eine Signalverarbeitungseinrichtung (3) aufweist, wobei die Signalverarbeitungseinrichtung (3) dazu eingerichtet ist, auf der Grundlage eines Messsignals (S1, S2) das Bremsmoment ($M_B$) in Bezug auf die Bewegungsrichtung (B) des Bremselements (12) zu bestimmen (101),

wobei das Piezoelement (2a, 2b) in der Weise in einem Kraftfluss zwischen dem Bremselement (12) und einem Gegenlager (13), welches die Bremseinrichtung (11) abstützt, anordnbar ist, dass bei Einwirken einer Kraft in Bewegungsrichtung (B) des Bremselements (12) auf das Piezoelement (2a, 2b) das Messsignal unter Ausnutzung eines piezoelektrischen Schereffekts des Piezoelements (2a, 2b) erzeugt wird,
das Messsystem (1) **dadurch gekennzeichnet, dass**
der Kraftfluss durch Reibkraftschluss in das Piezoelement (2a, 2b) einleitbar ist.

2. Messsystem (1) nach Anspruch 1, wobei der Kraftfluss durch einen Kraftschluss mittels Haftreibung in das Piezoelement (2a, 2b) einleitbar ist.

3. Messsystem (1) nach einem der vorhergehenden Ansprüche, wobei eine Vorzugsrichtung (V1, V2), in welche die maximale Intensität des Messsignals bei einer Kraftmessung auftritt, des Piezoelements (2a, 2b) tangential zu der Bewegungsrichtung (B) des Bremselements (12) in einem zentralen Angriffspunkt der Bremseinrichtung (11) an das Bremselement (12) ausgerichtet ist.

4. Messsystem (1) nach einem der vorhergehenden Ansprüche mit wenigstens zwei Piezoelementen (2a, 2b), wobei Vorzugsrichtungen (V1, V2), in welche die maximale Intensität des Messsignals bei einer Kraftmessung auftritt, der Piezoelemente (2a, 2b) in einer einzigen Ebene liegen und vorzugsweise parallel ausgerichtet sind.

5. Messsystem (1) nach einem der vorhergehenden Ansprüche mit wenigstens drei Piezoelementen (2a, 2b), wobei die Signalverarbeitungseinrichtung (3) des Weiteren eingerichtet ist, das Bremsmoment mittels einer, insbesondere orthogonalen, Zerlegung von Messsignalen oder Kraftmessungen der einzelnen Piezoelemente (2a, 2b) in Anteile, welche zu den jeweiligen abzuleitenden Kraftkomponenten und/oder Drehmomentkomponenten beitragen, zu bestimmen, wobei, insbesondere alle, Beiträge der einzelnen Piezoelemente (2a, 2b) zu den jeweiligen abzuleitenden Kraftkomponenten und/oder Drehmomentkomponenten berücksichtigt werden.

6. Messsystem (1) nach einem der vorhergehenden Ansprüche, wobei die Signalverarbeitungseinrichtung (3) des Weiteren dazu eingerichtet ist, das Bremsmoment ausschließlich auf der Grundlage des Messsignals und einer Position des wenigstens einen Piezoelements (2a, 2b) in Bezug auf eine Drehachse (D) des Bremselements (12) zu bestimmen, wobei insbesondere kein Reibungskoeffizient zwischen einem Bremsbelag und des Bremselement (12) berücksichtigt wird.

7. Messanordnung (10) zur Bestimmung eines Bremsmoments aufweisend ein Messsystem (1) nach einem der vorhergehenden Ansprüche, eine Bremseinrichtung (11), ein abzubremsendes bewegliches Bremselement (12), und ein Gegenlager (13).

8. Messanordnung (10) nach Anspruch 7, wobei das wenigstens eine Piezoelement (2a, 2b) zwischen Bremseinrichtung (11) und Gegenlager (13), vorzugsweise mit einer Vorspannung belastet, angeordnet ist.

9. Messanordnung (10) nach Anspruch 7 oder 8, wobei eine Stirnfläche (4) des wenigstens einen Piezoelements (2a, 2b) wenigstens im Wesentlichen senkrecht zu einer Ebene des Bremselements (12) angeordnet ist.

10. Verfahren (100) zur Bestimmung eines Bremsmoments, welches beim Bremsen zwischen einer feststehenden Bremseinrichtung (11) und einem abzubremsenden drehbeweglichen Bremselement (12), insbesondere einer Bremsscheibe, übertragen wird, wobei wenigstens ein Piezoelement (2a, 2b) in der Weise in einem Kraftfluss zwischen dem Bremselement (12) und einem Gegenlager (13), welches die Bremseinrichtung (11) abstützt, angeordnet ist, dass bei Einwirken einer Kraft in Bewegungsrichtung (B) des Bremselements (12) auf das Piezoelement (2a, 2b) ein Messsignal unter Ausnutzung eines piezoelektrischen Schereffekts des Piezoelements (2a, 2b) erzeugt wird, wobei auf der Grundlage des Messsignals das Bremsmoment ($M_B$) in Bezug auf die Bewegungsrichtung (B) des Bremselements (12) bestimmt wird (101), und
wobei der Kraftfluss durch Reibkraftschluss in das Piezoelement (2a, 2b) einleitbar ist.

11. Verfahren (100) nach Anspruch 10, folgende Arbeitsschritte aufweisend:

- Betätigen der Bremseinrichtung (11) mit einer definierten Intensität (102); und
- Bestimmen der Intensität des Betätigens, ab welcher ein Schwellwert für das Messsignal ($S_1$, $S_2$) oder das Bremsmoment ($M_B$) erreicht ist (103).

**12.** Verfahren (100) nach Anspruch 11, wobei der Schwellwert dann erreicht ist, wenn eine Intensität des Messsignals ($S_1$, $S_2$) von einer Rotationsgeschwindigkeit ($\dot{\varphi}$) des Bremselements (12) abhängig, insbesondere proportional, ist.

**13.** Verfahren (100) nach einem der Ansprüche 10 bis 12, wobei wenigstens zwei Piezoelemente (2a, 2b) in dem Kraftfluss angeordnet sind, folgende Arbeitsschritte aufweisend:

- Betätigen der Bremseinrichtung (11) mit einer definierten Intensität (104);
- Vergleichen der Messsignale ($S_1$, $S_2$) der Piezoelemente (2a, 2b) zueinander (105), insbesondere in betätigtem Zustand der Bremseinrichtung (11); und
- Bestimmen eines Offset-Werts für wenigstens eines der Messsignale ($S_1$, $S_2$) auf der Grundlage des Vergleichens (106).

**14.** Verfahren nach einem der Ansprüche 10 bis 13, wobei das Bremsmoment ($M_B$) welche in Bewegungsrichtung des Bremselements wirkt, mittels Messungen von Reaktionskräften, welche durch ein Gegenlager der Bremseinrichtung bereitgestellt werden, durch wenigstens ein Piezoelement bestimmt wird.

**15.** Verfahren nach einem der Ansprüche 10 bis 14, wobei wenigstens drei Piezoelemente (2a, 2b) in dem Kraftfluss angeordnet sind und Kraftkomponenten und Drehmomentkomponenten mittels eines Gleichungssystems auf der Grundlage von Messsignalen der einzelnen Piezoelemente (2a, 2b) bestimmt werden, wobei das Bremsmoment ($M_B$) aus den Drehmomentkomponenten abgeleitet wird, wobei vorzugsweise Messsignale oder von diesen abgeleitete Kraftmessungen der einzelnen Piezoelemente (2a, 2b) in Anteile, welche zu den jeweiligen zu bestimmenden Kraftkomponenten und/oder Drehmomentkomponenten beitragen, zerlegt werden, wobei weiter vorzugsweise, insbesondere alle, Beiträge der einzelnen Piezoelemente zu den jeweiligen zu bestimmenden Kraftkomponenten und/oder Drehmomentkomponenten berücksichtigt werden.

**Claims**

**1.** Measuring system (1) for determining a braking torque ($M_B$) between a stationary braking device (11) and a rotatable braking element (12) to be braked, in particular a brake disk, the measuring system (1) having at least one piezo element (2a, 2b) and a signal processing device (3), the signal processing device (3) being set up to determine (101) the braking torque ($M_B$) in relation to the direction of movement (B) of the braking element (12) on the basis of a measurement signal (S1, S2),
whereby
the piezo element (2a, 2b) can be arranged in a force flow between the braking element (12) and a counter-bearing (13) which supports the braking device (11), in such a way that when a force acts on the piezo element (2a, 2b), the measuring signal is generated using a piezoelectric shear effect of the piezo element (2a, 2b), the measuring system (1) being **characterized in that** the force flow can be introduced into the piezo element (2a, 2b) by frictional force closure.

**2.** Measuring system (1) according to claim 1, wherein the force flow can be introduced into the piezo element (2a, 2b) by means of a frictional connection by means of static friction.

**3.** Measuring system (1) according to one of the preceding claims, wherein a preferred direction (V1, V2), in which the maximum intensity of the measuring signal occurs during a force measurement, of the piezo element (2a, 2b) is aligned tangentially to the direction of movement (B) of the braking element (12) at a central point of application of the braking device (11) to the braking element (12).

**4.** Measuring system (1) according to one of the preceding claims with at least two piezo elements (2a, 2b), wherein preferred directions (V1, V2), in which the maximum intensity of the measuring signal occurs during a force measurement, of the piezo elements (2a, 2b) lie in a single plane and are preferably aligned parallel.

**5.** Measuring system (1) according to one of the preceding claims with at least three piezo elements (2a, 2b), wherein the signal processing device (3) is furthermore set up to determine the braking torque by means of a, in particular orthogonal, decomposition of measurement signals or force measurements of the individual piezo elements (2a, 2b) into portions which contribute to the respective force components and/or torque components to be derived, wherein, in particular all, contributions of the individual piezo elements (2a, 2b) to the respective force components and/or torque components to be derived are taken into account.

6. Measuring system (1) according to one of the preceding claims, wherein the signal processing device (3) is furthermore set up to determine the braking torque exclusively on the basis of the measurement signal and a position of the at least one piezo element (2a, 2b) with respect to an axis of rotation (D) of the braking element (12), wherein in particular no coefficient of friction between a brake lining and the braking element (12) is taken into account.

7. Measuring arrangement (10) for determining a braking torque, comprising a measuring system (1) according to one of the preceding claims, a braking device (11), a movable braking element (12) to be braked, and a counter bearing (13).

8. Measuring arrangement (10) according to claim 7, wherein the at least one piezo element (2a, 2b) is arranged between the braking device (11) and the counter bearing (13), preferably loaded with a preload.

9. Measuring arrangement (10) according to claim 7 or 8, wherein an end face (4) of the at least one piezo element (2a, 2b) is arranged at least substantially perpendicular to a plane of the braking element (12) .

10. Method (100) for determining a braking torque which is transmitted during braking between a stationary braking device (11) and a rotatable braking element (12), in particular a brake disk, which is to be braked, at least one piezo element (2a, 2b) being arranged in a force flow between the braking element (12) and a counter-bearing (13) which supports the braking device (11), that when a force acts on the piezo element (2a, 2b) in the direction of movement (B) of the braking element (12), a measurement signal is generated by utilizing a piezoelectric shear effect of the piezo element (2a, 2b), the braking torque ($M_B$) being determined (101) on the basis of the measurement signal with respect to the direction of movement (B) of the braking element (12), and
whereby the force flow can be introduced into the piezo element (2a, 2b) by frictional force locking.

11. The method (100) according to claim 10, comprising the following steps:

- actuating the braking device (11) with a defined intensity (102); and
- Determining the intensity of actuation above which a threshold value for the measurement signal ($S_1$, $S_2$) or the braking torque ($M_B$) is reached (103).

12. Method (100) according to claim 11, wherein the threshold value is reached when an intensity of the measurement signal ($S_1$, $S_2$) is dependent, in particular proportional, on a rotational speed ($\dot{\varphi}$) of the braking element (12).

13. Method (100) according to one of claims 10 to 12, wherein at least two piezo elements (2a, 2b) are arranged in the force flow, comprising the following operating steps:

- Actuation of the braking device (11) with a defined intensity (104);
- comparing the measurement signals ($S_1$, $S_2$) of the piezo elements (2a, 2b) with one another (105), in particular when the braking device (11) is actuated; and
- Determining an offset value for at least one of the measurement signals ($S_1$, $S_2$) on the basis of the comparison (106).

14. Method according to any one of claims 10 to 13, wherein the braking torque ($M_B$) acting in the direction of movement of the braking element is determined by means of measurements of reaction forces provided by a counter bearing of the braking device by at least one piezo element.

15. Method according to one of claims 10 to 14, wherein at least three piezo elements (2a, 2b) are arranged in the force flow and force components and torque components are determined by means of an equation system on the basis of measurement signals of the individual piezo elements (2a, 2b), wherein the braking torque ($M_B$) is derived from the torque components, wherein preferably measurement signals or force measurements of the individual piezo elements (2a, 2b) derived therefrom are broken down into portions which contribute to the respective force components and/or torque components to be determined, wherein further preferably, in particular all, contributions of the individual piezo elements to the respective force components and/or torque components to be determined are taken into account.

**Revendications**

1. Système de mesure (1) pour déterminer un couple de freinage ($M_B$) entre un dispositif de freinage fixe (11) et un élément de freinage mobile en rotation (12) à freiner, en particulier un disque de frein, dans lequel le système de mesure (1) présente au moins un élément piézoélectrique (2a, 2b) et un dispositif de traitement de signal (3), dans lequel le dispositif de traitement de signal (3) est mis au point pour déterminer (101), sur la base d'un signal de mesure (S1, S2), le couple de freinage ($M_B$) par rapport à la direction de déplacement (B) l'élément de freinage (12), dans lequel

   l'élément piézoélectrique (2a, 2b) peut être disposé dans un flux de force entre l'élément de freinage (12) et une butée (13), laquelle supporte le dispositif de freinage (11), de telle sorte qu'en cas d'action d'une force dans la direction de déplacement (B) de l'élément de freinage (12) sur l'élément piézoélectrique (2a, 2b), le signal de mesure est généré en utilisant un effet de cisaillement piézoélectrique de l'élément piézoélectrique (2a, 2b), le système de mesure (1) étant **caractérisé en ce que** le flux de force peut être appliqué par une liaison à force de frottement dans l'élément piézoélectrique (2a, 2b).

2. Système de mesure (1) selon la revendication 1, dans lequel le flux de force peut être appliqué dans l'élément piézoélectrique (2a, 2b) par une liaison à force au moyen d'une friction d'adhérence.

3. Système de mesure (1) selon l'une quelconque des revendications précédentes, dans lequel une direction préférée (V1, V2), dans laquelle l'intensité maximale du signal de mesure survient lors d'une mesure de force, de l'élément piézoélectrique (2a, 2b) est orientée tangentiellement à la direction de déplacement (B) de l'élément de freinage (12) dans un point d'attaque central du dispositif de freinage (11) sur l'élément de freinage (12).

4. Système de mesure (1) selon l'une quelconque des revendications précédentes avec au moins deux éléments piézoélectriques (2a, 2b), dans lequel des directions préférées (V1, V2), dans lesquelles l'intensité maximale du signal de mesure survient lors d'une mesure de force, des éléments piézoélectriques (2a, 2b) se trouvent dans un seul plan et sont de préférence orientées parallèlement.

5. Système de mesure (1) selon l'une quelconque des revendications précédentes avec au moins trois éléments piézoélectriques (2a, 2b), dans lequel le dispositif de traitement de signal (3) est mis au point par ailleurs pour déterminer le couple de freinage au moyen d'une décomposition, en particulier orthogonale de signaux de mesure ou de mesures de force des divers éléments piézoélectriques (2a, 2b) en proportions, qui contribuent aux composants de force et/ou aux composants de couple de rotation respectifs à déduire , dans lequel en particulier toutes, les contributions des divers éléments piézoélectriques (2a, 2b) aux composants de force et/ou aux composants de couple de rotation respectifs à déduire sont prises en compte.

6. Système de mesure (1) selon l'une quelconque des revendications précédentes, dans lequel le dispositif de traitement de signal (3) est en outre mis au point pour déterminer le couple de freinage exclusivement sur la base du signal de mesure et d'une position de l'au moins un élément piézoélectrique (2a, 2b) par rapport à un axe de rotation (D) de l'élément de freinage (12), dans lequel en particulier aucun coefficient de frottement entre une garniture de frein et l'élément de freinage (12) n'est pris en compte.

7. Ensemble de mesure (10) pour la détermination d'un couple de freinage présentant un système de mesure (1) selon l'une quelconque des revendications précédentes, un dispositif de freinage (11), un élément de freinage mobile (12) à freiner, et une butée (13).

8. Ensemble de mesure (10) selon la revendication 7, dans lequel l'au moins un élément piézoélectrique (2a, 2b) est disposé entre le dispositif de freinage (11) et la butée (13), de préférence de manière chargée d'une précontrainte.

9. Ensemble de mesure (10) selon la revendication 7 ou 8, dans lequel une surface frontale (4) de l'au moins un élément piézoélectrique (2a, 2b) est disposée au moins sensiblement perpendiculairement à un plan de l'élément de freinage (12).

10. Procédé (100) de détermination d'un couple de freinage qui, lors du freinage, est transmis entre un dispositif de freinage fixe (11) et un élément de freinage mobile en rotation (12) à freiner, en particulier un disque de frein, dans lequel au moins un élément piézoélectrique (2a, 2b) est disposé dans un flux de force entre l'élément de freinage (12) et une butée (13), laquelle supporte le dispositif de freinage (11), de telle manière que lors de l'action d'une force dans la direction de déplacement (B) de l'élément de freinage (12) sur l'élément piézoélectrique (2a, 2b), un signal de mesure est généré en utilisant un effet de cisaillement piézoélectrique de l'élément piézoélectrique (2a, 2b), dans lequel le couple de freinage ($M_B$) est déterminé (101) sur la base du signal de mesure par rapport à la direction de déplacement (B) de l'élément de freinage (12), et

dans lequel le flux de force peut être appliqué dans l'élément piézoélectrique (2a, 2b) par une liaison à force de frottement.

11. Procédé (100) selon la revendication 10, présentant par ailleurs des étapes de travail suivantes :

- d'actionnement du dispositif de freinage (11) avec une intensité définie (102) ; et
- de détermination de l'intensité de l'actionnement à partir de laquelle une valeur de seuil pour le signal de mesure ($S_1$, $S_2$) ou le couple de freinage ($M_B$) est atteinte (103).

12. Procédé (100) selon la revendication 11, dans lequel la valeur de seuil est atteinte lorsqu'une intensité du signal de mesure ($S_1$, $S_2$) dépend, en particulier de manière proportionnelle, d'une vitesse de rotation ($\dot{\varphi}$) de l'élément de freinage (12).

13. Procédé (100) selon l'une quelconque des revendications 10 à 12, dans lequel au moins deux éléments piézoélectriques (2a, 2b) sont disposés dans le flux de force, présentant des étapes de travail suivantes :

- d'actionnement du dispositif de freinage (11) avec une intensité définie (104) ;
- de comparaison des signaux de mesure ($S_1$, $S_2$) des éléments piézoélectriques (2a, 2b) entre eux (105), en particulier dans l'état actionné du dispositif de freinage (11) ; et
- de détermination d'une valeur de décalage pour au moins un des signaux de mesure ($S_1$, $S_2$) sur la base de la comparaison (106).

14. Procédé selon l'une quelconque des revendications 10 à 13, dans lequel le couple de freinage ($M_B$), qui agit dans la direction de déplacement de l'élément de freinage, est déterminé par au moins un élément piézoélectrique au moyen de mesures de forces de réaction, qui sont fournies par une butée du dispositif de freinage.

15. Procédé selon l'une des revendications 10 à 14, dans lequel au moins trois éléments piézoélectriques (2a, 2b) sont disposés dans le flux de force et des composants de force et des composants de couple de rotation sont déterminés au moyen d'un système d'équation sur la base de signaux de mesure des divers éléments piézoélectriques (2a, 2b), dans lequel le couple de freinage ($M_B$) est déduit des composants de couple de rotation, dans lequel de préférence des signaux de mesure ou des mesures de force déduites de celles-ci des divers éléments piézoélectriques (2a, 2b) sont décomposés en proportions, qui contribuent aux composants de force et/ou composants de couple de rotation respectifs à déterminer , dans lequel par ailleurs de préférence, en particulier toutes, les contributions des divers éléments piézoélectriques aux composants de force et/ou composants de couple de rotation respectifs à déterminer sont prises en compte.

Fig. 1

Fig. 2

*Fig. 3*

*Fig. 4*

**IN DER BESCHREIBUNG AUFGEFÜHRTE DOKUMENTE**

**In der Beschreibung aufgeführte Patentdokumente**

- US 2017082163 A1
- KR 20090057640 A
- EP 3472012 A1
- DE 4024811 A1